# EUROPEAN PATENT APPLICATION

(11) **EP 4 787 952 A1**
(43) Date of publication of application: **05.08.2026**
(21) Application number: 23953762.4
(22) Date of filing: 28.09.2023
(51) Int. Cl.: H04W 28/24, H04W 72/04

(54) **SERVICE DATA STREAM PROCESSING METHOD, NETWORK DEVICE, COMMUNICATION DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/122890
(87) International publication number: WO 2025/065618

(57) **Abstract**

The present invention relates to the technical field of communications, and in particular to a service data stream processing method, a network device, a communication device, and a storage medium. The service data stream processing method comprises receiving first information sent by a second network element, the first information comprising QoS requirements of a multiplexed service data stream; and performing policy decision on the basis of the first information. Therefore, multiplexed service data streams in a single end-to-end connection can be identified and mapped to corresponding one or more QoS flows.

## Description

### TECHNICAL FIELD

The disclosure relates to the field of communication technology, and specifically to a method for processing a service data flow, a network device, a communication device and a storage medium.

### BACKGROUND

In current communication systems, a service data flow transmitted for the same service or application may carry data input from the same device or different devices, and such data may be output to one or more targeted device terminals. Therefore, quality of service (QoS) characteristics of different types of data in the service data flow cannot be effectively guaranteed.

### SUMMARY

Embodiments of the disclosure provide a method for processing a service data flow, a network device, a communication device and a storage medium, so as to solve the technical problem in the related art that quality of service (QoS) characteristics of different types of data in the service data flow cannot be effectively guaranteed.

According to a first aspect of the embodiments of the disclosure, a method for processing a service data flow is provided, performed by a first network element. The method includes: receiving first information sent by a second network element, in which the first information includes a QoS requirement of a multiplexed service data flow; and performing a policy decision based on the first information.

According to a second aspect of the embodiments of the disclosure, a method for processing a service data flow is provided, performed by a second network element. The method includes: sending first information to a first network element to enable the first network element to perform a policy decision based on the first information, in which the first information includes a QoS requirement of a multiplexed service data flow.

According to a third aspect of the embodiments of the disclosure, a method for processing a service data flow is provided, performed by a third network element. The method includes: receiving a first message from a second network element, in which the first message is configured to instruct the second network element to forward first information to a first network element, and the first information includes a QoS requirement of a multiplexed service data flow.

According to a fourth aspect of the embodiments of the disclosure, a method for processing a service data flow is provided, performed by a fourth network element. The method includes: receiving third information from a first network element, in which the third information is configured to trigger a session management (SM) policy association modification request operation, the third information is determined by the first network element after performing a policy decision based on first information received from a second network element, and the first information includes a QoS requirement of a multiplexed service data flow; and determining at least one of a QoS rule or a QoS group parameter based on the third information.

According to a fifth aspect of the embodiments of the disclosure, a method for processing a service data flow is provided, performed by a fifth network element. The method includes: receiving fifth information from a fourth network element, in which the fifth information indicates at least one of a QoS rule or a QoS group parameter, the fifth information is determined by the fourth network element based on third information received from a first network element, the third information is configured to trigger an SM policy association modification request operation, the third information is determined by the first network element after performing a policy decision based on first information received from a second network element, and the first information includes a QoS requirement of a multiplexed service data flow.

According to a sixth aspect of the embodiments of the disclosure, an apparatus for processing a service data flow is provided. The apparatus includes: a transceiving module configured to receive first information sent by a second network element, in which the first information includes a QoS requirement of a multiplexed service data flow; and a processing module configured to perform a policy decision based on the first information.

According to a seventh aspect of the embodiments of the disclosure, an apparatus for processing a service data flow is provided. The apparatus includes: a processing module configured to determine first information, in which the first information includes a QoS requirement of a multiplexed service data flow; and a transceiving module configured to send the first information to a first network element to enable the first network element to perform a policy decision based on the first information.

According to an eighth aspect of the embodiments of the disclosure, an apparatus for processing a service data flow is provided. The apparatus includes: a transceiving module configured to receive a first message from a second network element, in which the first message is configured to instruct the second network element to forward first information to a first network element, and the first information includes a QoS requirement of a multiplexed service data flow.

According to a ninth aspect of the embodiments of the disclosure, an apparatus for processing a service data flow is provided. The apparatus includes: a transceiving module configured to receive third information from a first network element, in which the third information is configured to trigger an SM policy association modification request operation, the third information is determined by the first network element after performing a policy decision based on first information received from a second network element, and the first information includes a QoS requirement of a multiplexed service data flow; and a processing module configured to determine at least one of a QoS rule or a QoS group parameter based on the third information.

According to a tenth aspect of the embodiments of the disclosure, an apparatus for processing a service data flow is provided. The apparatus includes: a transceiving module configured to receive fifth information from a fourth network element, in which the fifth information indicates at least one of a QoS rule or a QoS group parameter, the fifth information is determined by the fourth network element based on third information received from a first network element, the third information is configured to trigger an SM policy association modification request operation, the third information is determined by the first network element after performing a policy decision based on first information received from a second network element, and the first information includes a QoS requirement of a multiplexed service data flow.

According to an eleventh aspect of embodiments of the disclosure, a network device is provided, including: one or more processors; and a memory coupled to the one or more processors, where executable instructions are stored on the memory, and when the executable instructions are executed by the one or more processors, the network device is caused to perform the method for processing a service data flow according to the first aspect, the second aspect, the third aspect, the fourth aspect or the fifth aspect.

According to a twelfth aspect of embodiments of the disclosure, a communication device is provided, including: one or more processors; and a memory coupled to the one or more processors, where executable instructions are stored on the memory, and when the executable instructions are executed by the one or more processors, the communication device is caused to perform the method for processing a service data flow according to the first aspect, the second aspect, the third aspect, the fourth aspect or the fifth aspect.

According to a thirteenth aspect of embodiments of the disclosure, a communication system is provided, including a first network element, a second network element, a third network element, a fourth network element and a fifth network element, where the first network element is configured to implement the method for processing a service data flow according to the first aspect, the second network element is configured to implement the method for processing a service data flow according to the second aspect, the third network element is configured to implement the method for processing a service data flow according to the third aspect, the fourth network element is configured to implement the method for processing a service data flow according to the fourth aspect, and the fifth network element is configured to implement the method for processing a service data flow according to the fifth aspect.

According to a fourteenth aspect of embodiments of the disclosure, a storage medium storing instructions is provided, where when the instructions are run on a communication device, the communication device is caused to perform the method for processing a service data flow according to the first aspect, the second aspect, the third aspect, the fourth aspect or the fifth aspect.

According to embodiments of the disclosure, a policy control function (PCF) may perform the policy decision based on the first information by acquiring the first information that is sent by an application function (AF) and includes the QoS requirement of the multiplexed service data flow. Accordingly, the multiplexed service data flow within a single end-to-end connection may be identified and mapped to one or more corresponding QoS flows.

### BRIEF DESCRIPTION OF THE DRAWINGS

For a clearer description of the technical solutions in the embodiments of the disclosure, the accompanying drawings involved in the description of the embodiments are briefly introduced below. Obviously, the accompanying drawings described below are merely some embodiments of the disclosure. For those of ordinary skill in the art, other drawings may be obtained based on these drawings without creative efforts.
FIG. 1 is a schematic diagram of a communication system according to an embodiment of the disclosure.
FIG. 2 is an interactive schematic diagram of a method for processing a service data flow according to an embodiment of the disclosure.
FIG. 3A is a schematic flowchart a method for processing a service data flow according to an embodiment of the disclosure.
FIG. 3B is a schematic flowchart a method for processing a service data flow according to an embodiment of the disclosure.
FIG. 4 is a schematic flowchart a method for processing a service data flow according to an embodiment of the disclosure.
FIG. 5 is a schematic flowchart a method for processing a service data flow according to an embodiment of the disclosure.
FIG. 6 is a schematic flowchart a method for processing a service data flow according to an embodiment of the disclosure.
FIG. 7 is a schematic flowchart a method for processing a service data flow according to an embodiment of the disclosure.
FIG. 8 is a schematic block diagram of a network device according to an embodiment of the disclosure.
FIG. 9 is a schematic block diagram of a network device according to an embodiment of the disclosure.
FIG. 10 is a schematic block diagram of a network device according to an embodiment of the disclosure.
FIG. 11 is a schematic block diagram of a network device according to an embodiment of the disclosure.
FIG. 12 is a schematic block diagram of a network device according to an embodiment of the disclosure.
FIG. 13 is a schematic diagram of a communication device according to an embodiment of the disclosure.
FIG. 14 is a schematic diagram of a chip according to an embodiment of the disclosure.

### DETAILED DESCRIPTION

Embodiments of the disclosure provide a method for processing a service data flow, a network device, a communication device and a storage medium.

According to a first aspect, embodiments of the disclosure provide a method for processing a service data flow, performed by a first network element. The method includes: receiving first information sent by a second network element, in which the first information includes a quality of service (QoS) requirement of a multiplexed service data flow; and performing a policy decision based on the first information.

In the above embodiments, a policy control function (PCF) may perform the policy decision based on the first information by acquiring the first information that is sent by an application function (AF) and includes the QoS requirement of the multiplexed service data flow. Accordingly, the multiplexed service data flow within a single end-to-end connection may be identified and mapped to one or more corresponding QoS flows.

In conjunction with some embodiments of the first aspect, in some embodiments, the multiplexed service data flow includes at least one of: an extended reality media (XRM) service data flow; or an interactive media service data flow.

In conjunction with some embodiments of the first aspect, in some embodiments, the first information includes at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In conjunction with some embodiments of the first aspect, in some embodiments, the first description information includes at least one of: a media type; a connection identifier (ID); a stream ID; a frame type; a frame ID; or a designated specific field ID.

In conjunction with some embodiments of the first aspect, in some embodiments, the second description information includes at least one of: a rule for mapping to a plurality of QoS flows; or an enhanced characteristic for mapping to a plurality of QoS flows.

In conjunction with some embodiments of the first aspect, in some embodiments, the enhanced characteristic for mapping to the plurality of QoS flows includes at least one of: a media type; a connection ID; a stream ID; a frame type; a frame ID; or a designated specific field ID.

In conjunction with some embodiments of the first aspect, in some embodiments, the first information further includes at least one of: encryption indication information; or XRM service information.

In conjunction with some embodiments of the first aspect, in some embodiments, the XRM service information includes at least one of: a first service ID indicating an XRM service data flow or an XRM service data flow group; a user equipment (UE) address; a UE ID; an application ID of the second network element; data flow description information; a data network name (DNN); single-network slice selection assistance information (S-NSSAI); or a QoS parameter.

In conjunction with some embodiments of the first aspect, in some embodiments, receiving the first information sent by the second network element includes: receiving the first information via a third network element, in which the first information is sent by the second network element to the third network element.

In conjunction with some embodiments of the first aspect, in some embodiments, receiving the first information via the third network element includes: receiving the first information via a sixth network element, in which the first information is sent by the third network element to the sixth network element.

In conjunction with some embodiments of the first aspect, in some embodiments, performing the policy decision based on the first information includes: generating or updating a policy and charging control (PCC) rule based on the first information.

In conjunction with some embodiments of the first aspect, in some embodiments, the method further includes: sending second information to the second network element, in which the second information includes response information to the QoS requirement.

In conjunction with some embodiments of the first aspect, in some embodiments, sending the second information to the second network element includes: sending the second information to the second network element via a third network element.

In conjunction with some embodiments of the first aspect, in some embodiments, the method further includes: triggering a session management (SM) policy association modification request operation.

In conjunction with some embodiments of the first aspect, in some embodiments, triggering the SM policy association modification request operation includes: sending third information to a fourth network element, in which the third information indicates the PCC rule.

In conjunction with some embodiments of the first aspect, in some embodiments, the third information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In conjunction with some embodiments of the first aspect, in some embodiments, the method further includes: receiving fourth information from the fourth network element, in which the fourth information is response information to the third information.

In conjunction with some embodiments of the first aspect, in some embodiments, the first network element is a PCF network element.

In conjunction with some embodiments of the first aspect, in some embodiments, the second network element is an AF network element.

In conjunction with some embodiments of the first aspect, in some embodiments, the third network element is a network exposure function (NEF) network element.

In conjunction with some embodiments of the first aspect, in some embodiments, the fourth network element is a session management function (SMF) network element.

In conjunction with some embodiments of the first aspect, in some embodiments, the fifth network element is a user plane function (UPF) network element.

According to a second aspect, embodiments of the disclosure provide a method for processing a service data flow, performed by a second network element. The method includes: sending first information to a first network element to enable the first network element to perform a policy decision based on the first information, in which the first information includes a QoS requirement of a multiplexed service data flow.

In conjunction with some embodiments of the second aspect, in some embodiments, the multiplexed service data flow includes at least one of: an XRM service data flow; or an interactive media service data flow.

In conjunction with some embodiments of the second aspect, in some embodiments, the first information includes at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In conjunction with some embodiments of the second aspect, in some embodiments, the first description information includes at least one of: a media type; a connection ID; a stream ID; a frame type; a frame ID; or a designated specific field ID.

In conjunction with some embodiments of the second aspect, in some embodiments, the second description information includes at least one of: a rule for mapping to a plurality of QoS flows; or an enhanced characteristic for mapping to a plurality of QoS flows.

In conjunction with some embodiments of the second aspect, in some embodiments, the enhanced characteristic for mapping to the plurality of QoS flows includes at least one of: a media type; a connection ID; a stream ID; a frame type; a frame ID; or a designated specific field ID.

In conjunction with some embodiments of the second aspect, in some embodiments, the second network element is a non-trusted network element, and sending the first information to the first network element includes: sending a first message to a third network element, in which the first message is configured to instruct the third network element to forward the first information to the first network element.

In conjunction with some embodiments of the second aspect, in some embodiments, the method further includes: receiving second information sent by the first network element, in which the second information includes response information to the QoS requirement.

In conjunction with some embodiments of the second aspect, in some embodiments, receiving the second information sent by the first network element includes: receiving the second information via a third network element.

According to a third aspect, embodiments of the disclosure provide a method for processing a service data flow, performed by a third network element. The method includes: receiving a first message from a second network element, in which the first message is configured to instruct the second network element to forward first information to a first network element, and the first information includes a QoS requirement of a multiplexed service data flow.

In conjunction with some embodiments of the third aspect, in some embodiments, first description information includes at least one of: a media type; a connection ID; a stream ID; a frame type; a frame ID; or a designated specific field ID.

In conjunction with some embodiments of the third aspect, in some embodiments, second description information includes at least one of: a rule for mapping to a plurality of QoS flows; or an enhanced characteristic for mapping to a plurality of QoS flows.

In conjunction with some embodiments of the third aspect, in some embodiments, the enhanced characteristic for mapping to the plurality of QoS flows includes at least one of: a media type; a connection ID; a stream ID; a frame type; a frame ID; or a designated specific field ID.

In conjunction with some embodiments of the third aspect, in some embodiments, the method further includes: determining to authorize the first message; and sending the first information to the first network element.

In conjunction with some embodiments of the third aspect, in some embodiments, the method further includes: performing, based on the first information, at least one of the following relevant mappings: a mapping of an XRM service to a DNN; a mapping of an XRM service to S-NSSAI; a mapping of an external application to a core network (CN) application ID; a mapping of an external UE ID to a CN-internal UE ID; or a mapping of an external XRM service group ID to a CN XRM service group ID.

In conjunction with some embodiments of the third aspect, in some embodiments, sending the first information to the first network element includes: forwarding the first information to the first network element via a sixth network element.

In conjunction with some embodiments of the third aspect, in some embodiments, the method further includes: receiving second information from the first network element, in which the second information includes response information to the QoS requirement; and forwarding the second information to the second network element.

According to a fourth aspect, embodiments of the disclosure provide a method for processing a service data flow, performed by a fourth network element. The method includes: receiving third information from a first network element, in which the third information is configured to trigger an SM policy association modification request operation, the third information is determined by the first network element after performing a policy decision based on first information received from a second network element, and the first information includes a QoS requirement of a multiplexed service data flow; and determining at least one of a QoS rule or a QoS group parameter based on the third information.

In conjunction with some embodiments of the fourth aspect, in some embodiments, the third information indicates a PCC rule.

In conjunction with some embodiments of the fourth aspect, in some embodiments, the third information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In conjunction with some embodiments of the fourth aspect, in some embodiments, the method further includes: sending fourth information to the first network element, in which the fourth information is response information to the third information.

In conjunction with some embodiments of the fourth aspect, in some embodiments, the method further includes: sending fifth information to a fifth network element based on the third information, in which the fifth information indicates at least one of the QoS rule or the QoS group parameter.

In conjunction with some embodiments of the fourth aspect, in some embodiments, sending the fifth information to the fifth network element includes: sending the fifth information to the fifth network element via an N4 session.

In conjunction with some embodiments of the fourth aspect, in some embodiments, the fifth information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In conjunction with some embodiments of the fourth aspect, in some embodiments, the method further includes: sending sixth information to a seventh network element to enable the seventh network element to send the sixth information to a terminal via an access network device, in which the sixth information indicates at least one of the QoS rule or the QoS group parameter.

In conjunction with some embodiments of the fourth aspect, in some embodiments, the sixth information includes at least one of: a protocol data unit (PDU) session ID; a QoS flow identifier (QFI); a QoS profile; or an N1 SM container.

In conjunction with some embodiments of the fourth aspect, in some embodiments, the method further includes: receiving seventh information from the seventh network element, in which the seventh information indicates a resource setup performed by the terminal based on the sixth information.

In conjunction with some embodiments of the fourth aspect, in some embodiments, the method further includes: sending eighth information to the seventh network element, in which the eighth information includes response information to the seventh information.

In conjunction with some embodiments of the fourth aspect, in some embodiments, the method further includes: determining, based on the seventh information, to update an N4 session with the fifth network element.

According to a fifth aspect, embodiments of the disclosure provide a method for processing a service data flow, performed by a fifth network element. The method includes: receiving fifth information from a fourth network element, in which the fifth information indicates at least one of a QoS rule or a QoS group parameter, the fifth information is determined by the fourth network element based on third information received from a first network element, the third information is configured to trigger an SM policy association modification request operation, the third information is determined by the first network element after performing a policy decision based on first information received from a second network element, and the first information includes a QoS requirement of a multiplexed service data flow.

In conjunction with some embodiments of the fifth aspect, in some embodiments, receiving the fifth information from the fourth network element includes: receiving the fifth information from the fourth network element via an N4 session.

In conjunction with some embodiments of the fifth aspect, in some embodiments, the fifth information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In conjunction with some embodiments of the fifth aspect, in some embodiments, the method further includes: performing a traffic detection based on the fifth information.

In conjunction with some embodiments of the fifth aspect, in some embodiments, the method further includes: mapping, based on the fifth information and a traffic detection result, one or more multiplexed data flows of different media types within a single end-to-end transmission connection to one or more QoS flows.

According to a sixth aspect, embodiments of the disclosure provide an apparatus for processing a service data flow. The apparatus includes: a transceiving module configured to receive first information sent by a second network element, in which the first information includes a QoS requirement of a multiplexed service data flow; and a processing module configured to perform a policy decision based on the first information.

According to a seventh aspect, embodiments of the disclosure provide an apparatus for processing a service data flow. The apparatus includes: a processing module configured to determine first information, in which the first information includes a QoS requirement of a multiplexed service data flow; and a transceiving module configured to send the first information to a first network element to enable the first network element to perform a policy decision based on the first information.

According to an eighth aspect, embodiments of the disclosure provide an apparatus for processing a service data flow. The apparatus includes: a transceiving module configured to receive a first message from a second network element, in which the first message is configured to instruct the second network element to forward first information to a first network element, and the first information includes a QoS requirement of a multiplexed service data flow.

According to a ninth aspect, embodiments of the disclosure provide an apparatus for processing a service data flow. The apparatus includes: a transceiving module configured to receive third information from a first network element, in which the third information is configured to trigger an SM policy association modification request operation, the third information is determined by the first network element after performing a policy decision based on first information received from a second network element, and the first information includes a QoS requirement of a multiplexed service data flow; and a processing module configured to determine at least one of a QoS rule or a QoS group parameter based on the third information.

According to a tenth aspect, embodiments of the disclosure provide an apparatus for processing a service data flow. The apparatus includes: a transceiving module configured to receive fifth information from a fourth network element, in which the fifth information indicates at least one of a QoS rule or a QoS group parameter, the fifth information is determined by the fourth network element based on third information received from a first network element, the third information is configured to trigger an SM policy association modification request operation, the third information is determined by the first network element after performing a policy decision based on first information received from a second network element, and the first information includes a QoS requirement of a multiplexed service data flow.

According to an eleventh aspect, embodiments of the disclosure provide a network device, including: one or more processors; and a memory coupled to the one or more processors, where executable instructions are stored on the memory, and when the executable instructions are executed by the one or more processors, the network device is caused to perform the method for processing a service data flow as described in optional embodiments of the first aspect, the second aspect, the third aspect, the fourth aspect or the fifth aspect.

According to a twelfth aspect, embodiments of the disclosure provide a communication device, including: one or more processors; and a memory coupled to the one or more processors, where executable instructions are stored on the memory, and when the executable instructions are executed by the one or more processors, the communication device is caused to perform the method for processing a service data flow as described in optional embodiments of the first aspect, the second aspect, the third aspect, the fourth aspect or the fifth aspect.

According to a thirteenth aspect, embodiments of the disclosure provide a communication system, including a first network element, a second network element, a third network element, a fourth network element and a fifth network element, where the first network element is configured to implement the method for processing a service data flow as described in optional embodiments of the first aspect, the second network element is configured to implement the method for processing a service data flow as described in optional embodiments of the second aspect, the third network element is configured to implement the method for processing a service data flow as described in optional embodiments of the third aspect, the fourth network element is configured to implement the method for processing a service data flow as described in optional embodiments of the fourth aspect, and the fifth network element is configured to implement the method for processing a service data flow as described in optional embodiments of the fifth aspect.

According to a fourteenth aspect, embodiments of the disclosure provide a storage medium storing instructions, where when the instructions are run on a communication device, the communication device is caused to perform the method for processing a service data flow as described in optional embodiments of the first aspect, the second aspect, the third aspect, the fourth aspect or the fifth aspect.

According to a fifteenth aspect, embodiments of the disclosure provide a program product, which, when executed by a communication device, causes the communication device to perform the method for processing a service data flow as described in optional embodiments of the first aspect, the second aspect, the third aspect, the fourth aspect or the fifth aspect.

According to a sixteenth aspect, embodiments of the disclosure provide a computer program, which, when run on a computer, causes the computer to perform the method for processing a service data flow as described in optional embodiments of the first aspect, the second aspect, the third aspect, the fourth aspect or the fifth aspect.

It may be understood that the foregoing network device, communication device, communication system, storage medium, program product and computer program are all configured to perform the method provided by embodiments of the disclosure. Therefore, the beneficial effects achievable thereby may refer to the beneficial effects in the corresponding method, and are not repeated herein.

Embodiments of the disclosure provide a method for processing a service data flow, a network device, a communication device and a storage medium. In some embodiments, terms such as an information transmission method, an information reception method, an information processing method and a communication method may be replaced with each other; terms such as a network device, an information processing apparatus and a communication apparatus may be replaced with each other; and terms such as an information processing system and a communication system may be replaced with each other.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, implementations in a certain embodiment may be combined arbitrarily; furthermore, the embodiments may be combined arbitrarily. For example, some or all steps of different embodiments may be combined arbitrarily, and a certain embodiment may be combined arbitrarily with implementations of other embodiments.

In each embodiment of the disclosure, unless otherwise specified and without logical conflict, the terms and/or descriptions between the embodiments are consistent and may be crossreferenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "aforesaid", "said", "foregoing", "this", may denote "one and only one", or "one or more", "at least one", etc.

For example, when articles such as "a", "an", and "the" in English are used in translation, the noun following the article may be understood as a singular form or a plural form.

In the embodiments of the disclosure, "a plurality of" refers to two or more.

In some embodiments, terms such as "at least one (of)", "one or more", "a plurality of", and "multiple" may be used interchangeably.

In some embodiments, recitations such as "at least one of A, B", "A and/or B", "A in one case and B in another case", "A in response to one case and B in response to another case" may include the following technical solutions as appropriate: in some embodiments, A (performing A independently of B); in some embodiments, B (performing B independently of A); in some embodiments, selectively performing from A and B (A and B are selectively performed); in some embodiments, both A and B (both A and B are performed). The same applies when there are more items such as A, B, C.

In some embodiments, a recitation such as "A or B" may include the following technical solutions as appropriate: in some embodiments, A (performing A independently of B); in some embodiments, B (performing B independently of A); in some embodiments, selectively performing from A and B (A and B are selectively performed). The same applies when there are more items such as A, B, C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes.

For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, "apparatus" may be construed as either entity or virtual. Names of the "apparatus" are not limited to those recorded in the embodiments.

The terms such as "apparatus", "equipment", "device", "circuit", "network element", "node", "function", "unit", "section", "system", "network", "chip", "chip system", "entity" and "subject" may be used interchangeably.

In some embodiments, the term "network" may be interpreted as an apparatus included in a network (e.g., an access network device, a core network device, etc.).

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, the terms "terminal", "terminal device", "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, an access network device, a core network device, or a network device may be replaced with a terminal. For example, the embodiments of the disclosure may also be applied to a structure in which communication between an access network device, a core network device, or a network device and a terminal is replaced with communication between a plurality of terminals (e.g., which may also be referred to as device-to-device (D2D), vehicle-to-everything (V2X), etc.). In this case, a structure in which a terminal has all or part of the functions of an access network device may also be adopted. Furthermore, terms such as "uplink" and "downlink" may also be replaced with terms corresponding to inter-terminal communication (e.g., "sidelink"). For example, an uplink channel, a downlink channel, etc. may be replaced with a sidelink channel, and an uplink, a downlink, etc. may be replaced with a sidelink.

In some embodiments, a terminal may be replaced with an access network device, a core network device, or a network device. In this case, a structure in which an access network device, a core network device, or a network device has all or part of the functions of a terminal may also be adopted.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

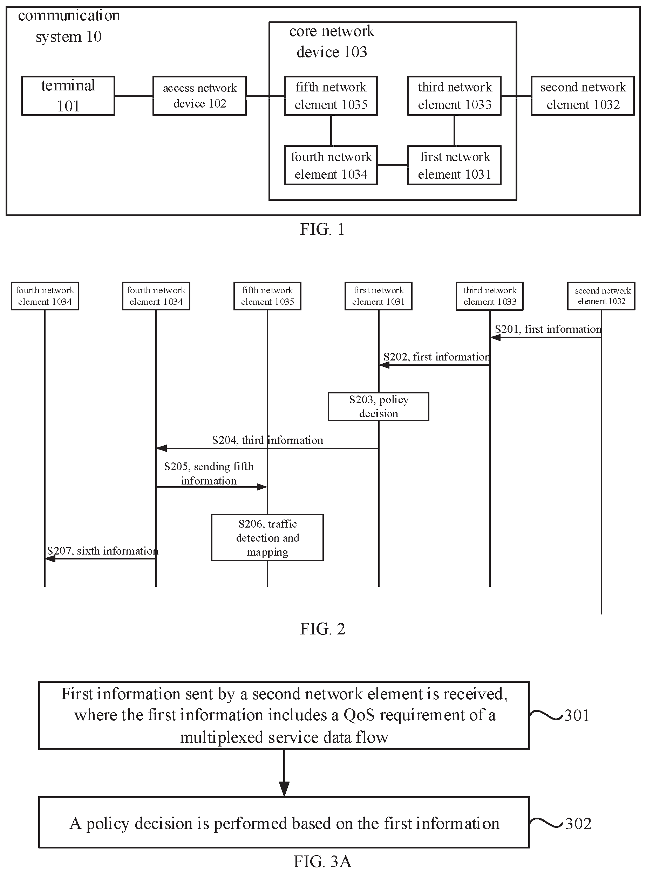

FIG. 1 is a schematic diagram of a communication system according to an embodiment of the disclosure.

As shown in FIG. 1, a communication system 100 may include a terminal 101, an access network device 102 and a core network device 103, in which the core network device 103 includes: a first network element 1031, a second network element 1032, a third network element 1033, a fourth network element 1034 and a fifth network element 1035.

In some embodiments, the terminal 101 includes, for example, at least one of a mobile phone, a wearable device, an Internet of Things (IoT) device, a vehicle with communication functions, an intelligent vehicle, a Pad, a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home, but is not limited thereto.

In some embodiments, the access network device is, for example, a node or device that connects a terminal to a wireless network. The access network device may include at least one of an evolved nodeB (eNB) in a fifth generation (5G) communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, or an access node in a wireless fidelity (Wi-Fi) system, but is not limited thereto.

In some embodiments, the core network device may be a single device including one or more network elements, or may be a plurality of devices or device clusters respectively including all or part of the one or more network elements. The one or more network elements may be virtual or physical. The core network includes, for example, at least one of an evolved packet core (EPC), a 5G core network (5GCN), and a next generation core (NGC).

In some embodiments, the technical solutions of the disclosure may be applicable to the open RAN architecture. In this case, interfaces between access network devices or within the access network device involved in the embodiments of the disclosure may be changed to internal interfaces of the open RAN, and procedures and information interactions between these internal interfaces may be implemented by software or programs.

In some embodiments, the access network device may be composed of a central unit (CU) and a distributed unit (DU), where the CU may also be referred to as a control unit. The adoption of a CU-DU structure may split protocol layers of the access network device, functions of some protocol layers are placed in the CU for centralized control, and the remaining part or all of the functions of the protocol layers are distributed in the DU, with the CU centrally controlling the DU, but is not limited thereto.

It may be understood that the communication system described in the embodiments of the disclosure is intended to illustrate the technical solutions of the embodiments of the disclosure more clearly, and does not constitute a limitation on the technical solutions proposed in the embodiments of the disclosure. Those of ordinary skill in the art will appreciate that, with the evolution of system architectures and the emergence of new service scenarios, the technical solutions provided in the embodiments of the disclosure are also applicable to similar technical problems.

The following embodiments of the disclosure may be applied to the communication system 100 shown in FIG. 1 or some entities thereof, but are not limited thereto. The entities shown in FIG. 1 are exemplary; a communication system may include all or some of the entities in FIG. 1, and may also include other entities beyond those in FIG. 1. The quantity and form of each entity are arbitrary; each entity may be physical or virtual. Connection relationships between the entities are exemplary. The entities may or may not be connected to each other, the connection between the entities may be in any manner, which may be a direct connection or an indirect connection, and may be a wired connection or a wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, IoT system, vehicle-to-everything (V2X), systems using other communication methods, next-generation systems extended based on them, etc. In addition, a plurality of systems may be combined (for example, a combination of LTE or LTE-A and 5G, etc.) for application.

FIG. 2 is an interactive schematic diagram of a method for processing a service data flow according to an embodiment of the disclosure.

As shown in FIG. 2, the method for processing a service data flow includes:

At step S201, the second network element 1032 sends first information, in which the second network element may be an operator-owned application function or an independent thirdparty application function.

In some embodiments, the second network element may send the first information to the first network element, in which the first information includes a QoS requirement of a multiplexed service data flow.

In some embodiments, the second network element may send the first information to a third network element.

In some embodiments, the second network element may send a first message to the third network element, in which the first message is configured to instruct the third network element to forward the first information to the first network element.

In some embodiments, the multiplexed service data flow includes an XRM service data flow and/or an interactive media service data flow.

In some embodiments, the first information may include at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the first description information includes at least one of: a media type; a connection ID; a stream ID; a frame type; a frame ID; or a designated specific field ID.

In some embodiments, the second description information includes at least one of: a rule for mapping to a plurality of QoS flows; or an enhanced characteristic for mapping to a plurality of QoS flows.

In some embodiments, the enhanced characteristic for mapping to the plurality of QoS flows includes at least one of: a media type; a connection ID; a stream ID; a frame type; a frame ID; or a designated specific field ID.

In some embodiments, the first information further includes: encryption indication information; or XRM service information.

In some embodiments, the XRM service information includes at least one of: a first service ID indicating an XRM service data flow or an XRM service data flow group; a UE address; a UE ID; an application ID of the second network element; data flow description information; a DNN; S-NSSAI; or a QoS parameter.

At step S202, the third network element 1033 sends the first information.

In some embodiments, after receiving the first message from the second network element, the third network element may determine to authorize the first message and forward the first information to the first network element.

In some embodiments, the third network element may forward the first information to the first network element via a sixth network element.

In some embodiments, the third network element may perform at least one of the following relevant mappings based on the first information: a mapping of an XRM service to a DNN; a mapping of an XRM service to S-NSSAI; a mapping of an external application to a CN application ID; a mapping of an external UE ID to a CN-internal UE ID; or a mapping of an external XRM service group ID to a CN XRM service group ID.

At step S203, the first network element 1031 performs a policy decision.

In some embodiments, the first network element may perform the policy decision based on the first information provided by the second network element.

In some embodiments, the first network element may generate or update a PCC rule based on the first information.

In some embodiments, the first network element may send second information to the second network element, in which the second information includes response information to the QoS requirement.

In some embodiments, the first network element may send the second information to the second network element via the third network element.

At step S204, the first network element 1031 sends third information.

In some embodiments, the first network element may send the third information to the fourth network element, where the third information indicates the PCC rule.

In some embodiments, the first network element may send the third information to the fourth network element by triggering an SM policy association modification request.

In some embodiments, the third information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, after receiving the third information from the first network element, the fourth network element may send fourth information to the first network element, where the fourth information is response information to the third information.

At step S205, the fourth network element 1034 sends fifth information.

In some embodiments, after receiving the third information from the first network element, the fourth network element may determine a QoS rule and/or a QoS group parameter based on the third information.

In some embodiments, the fourth network element may send the fifth information to the fifth network element, in which the fifth information indicates the QoS rule and/or the QoS group parameter.

In some embodiments, the fourth network element may send the fifth information to the fifth network element via an N4 session.

In some embodiments, the fifth information includes at least one of: a first indication indicating support for a traffic detection enhancement; first description information including information related to the traffic detection enhancement; a second indication indicating support for a QoS flow mapping enhancement; or second description information including information related to the QoS flow mapping enhancement.

At step S206, the fifth network element 1035 performs a traffic detection and a mapping.

In some embodiments, the fifth network element may perform the traffic detection based on the fifth information to identify QoS characteristics of PDUs or PDU sets with different features in a data flow, and map one or more multiplexed data flows of different media types within a single end-to-end transmission connection to one or more QoS flows.

At step S207, the fourth network element 1034 sends sixth information.

In some embodiments, the fourth network element sends the sixth information to a seventh network element to enable the seventh network element to send the sixth information to a terminal via an access network device, in which the sixth information indicates the QoS rule and/or the QoS group parameter.

In some embodiments, the sixth information includes at least one of: a PDU session ID; a QFI; a QoS profile; or an N1 SM container.

In some embodiments, the seventh network element may send the sixth information to the access network device.

In some embodiments, the access network device may perform a resource setup with the terminal based on the sixth information.

In some embodiments, the access network device may send seventh information to the seventh network element, in which the seventh information indicates the resource setup performed by the terminal based on the sixth information.

In some embodiments, the seventh network element may send the seventh information to the fourth network element.

In some embodiments, the fourth network element may send eighth information to the seventh network element, in which the eighth information includes response information to the seventh information.

In some embodiments, the fourth network element may determine to update an N4 session with the fifth network element based on the seventh information.

In some embodiments, the first network element is a PCF network element.

In some embodiments, the second network element is an AF network element.

In some embodiments, the third network element is a NEF network element.

In some embodiments, the fourth network element is an SMF network element.

In some embodiments, the fifth network element is an UPF network element.

The communication method involved in embodiments of the disclosure may include at least one of steps S201 to S207. For example, any one of steps S201 to S207 may be implemented as an independent embodiment, or at least two of steps S201 to S207 may be arbitrarily combined and implemented as an independent embodiment, but not limited thereto.

In some embodiments, steps S201 to S207 may be exchanged in order or performed simultaneously.

In some embodiments, step S201 is optional, and one or more of these steps may be omitted or substituted in different embodiments.

In some embodiments, step S202 is optional, and one or more of these steps may be omitted or substituted in different embodiments.

In some embodiments, step S203 is optional, and one or more of these steps may be omitted or substituted in different embodiments.

In some embodiments, step S204 is optional, and one or more of these steps may be omitted or substituted in different embodiments.

In some embodiments, step S205 is optional, and one or more of these steps may be omitted or substituted in different embodiments.

In some embodiments, step S206 is optional, and one or more of these steps may be omitted or substituted in different embodiments.

In some embodiments, step S207 is optional, and one or more of these steps may be omitted or substituted in different embodiments.

In some embodiments, reference may be made to other optional embodiments described before or after the specification corresponding to FIG. 2.

In some embodiments, services such as a mobile media service, an extended reality (XR) service including AR/VR, a cloud game, and a remote control of a video-based machine or a drone are expected to contribute an increasingly high volume of traffic to a communication network, for example, a 5G network. The XR service involves a multi-modal data flow. Multi-modal data refers to data input from the same device or different devices (including a sensor) that describes the same service/application, and such data may be output to one or more targeted device terminals. Data flows in the multi-modal data often have certain or even strong correlation, such as a synchronization of audio and video streams, a synchronization of haptic and visual data, etc. The data flows of such media services themselves, among the data flows, and requirements of these service data flows for network transmission all have some common characteristics. An effective identification and utilization of these characteristics will be more conducive to the transmission and control of networks and services, as well as to service guarantee and user experience.

XRM services and interactive media services require the 5G system (5GS) to comprehensively consider the QoS characteristics of relevant data flows of the services, for example, whether parameters such as a guaranteed bit rate (GBR) data flow that is delay critical, a guaranteed forwarding burst rate (GFBR), a packet delay budget (PDB), and a default maximum data burst volume (MDBV) may be simultaneously satisfied and consistent. A consistency guarantee of QoS authorization and implementation among a plurality of XRM data flows of one terminal (also referred to as UE) and an XRM data flow of a plurality of UEs.

At present, a QoS processing of a multiplexed service data flow in 5GS has enhanced functions such as a processing based on a PDU set, a congestion control, and transmitting an XRM service ID to the PCF for identifying a service data flow. However, it cannot support QoS requirements of XRM services in many network deployment, transmission protocol and service deployment scenarios, for example, supporting a PDU set based handling of a non-encrypted application service data flow, supporting a PDU set function of a plurality of protocols, and supporting a QoS enhancement of multimedia types multiplexed in the same XRM service data flow, etc.

In a first aspect, embodiments of the disclosure provides a method for processing a service data flow. FIG. 3A is a schematic flowchart of a method for processing a service data flow according to an embodiment of the disclosure. The method for processing a service data flow shown in this embodiment may be executed by a first network element, and the first network element may be a network device undertaking a policy control-related function, for example, a PCF network element in a core network device.

As shown in FIG. 3A, the method for processing a service data flow may include the following steps.

At step S301, first information sent by a second network element is received, where the first information includes a QoS requirement of a multiplexed service data flow.

At step S302, a policy decision is performed based on the first information.

In some embodiments, the first network element PCF may obtain the first information sent by the second network element, where the first information includes the QoS requirement for the multiplexed service data flow, and the PCF may perform the policy decision based on the obtained QoS requirement.

The second network element may be a network device undertaking a management and control function of an application service, for example, an AF network element in the core network device.

In some embodiments, the first network element PCF may obtain the first information sent by the second network element AF, where the first information includes the QoS requirement for the multiplexed service data flow, and perform the policy decision based on the first information.

The multiplexed service data flow may refer to a data flow multiplexed with multiple features, such as different media types, a connection ID, a stream ID in a connection, a frame type, a frame ID, or a designated specific field ID, within a single end-to-end transmission connection. PDUs or PDU sets with different features in the data flow have different QoS characteristics, and a QoS policy and guarantee may be implemented in a targeted manner for different QoS characteristics. The policy decision performed by the PCF based on the first information may be used to determine whether a policy needs to be adjusted or a new policy needs to be generated, so as to identify a data flow multiplexed with different media types within the single end-to-end connection and map the data flow to a corresponding QoS flow.

It should be noted that the embodiment shown in FIG. 3A may be implemented independently, or may be implemented in combination with at least one other embodiment of the disclosure, which may be selected according to needs, and the disclosure is not limited thereto.

In the above embodiment, the PCF performs the policy decision based on the first information by obtaining the first information including the QoS requirement of the multiplexed service data flow sent by the AF. Accordingly, the multiplexed service data flow within the single end-to-end connection may be identified and mapped to one or more corresponding QoS flows.

In some embodiments, the multiplexed service data flow includes at least one of: an XRM service data flow; or an interactive media service data flow.

In some embodiments, the first information sent by the AF and obtained by the PCF may include the QoS requirement of the XRM service data flow and/or the QoS requirement of the interactive media service data flow.

In some embodiments, the first information includes at least one of: a first indication, first description information, a second indication, or second description information.

The first indication may be expressed as an indication of a traffic detection enhancement, and indicate whether the traffic detection enhancement is supported. If the first indication indicates that the traffic detection enhancement is supported, it means that the multiplexed service data flow within the single end-to-end connection needs to be detected and identified.

The first description information may be expressed as a traffic detection enhancement description, and indicate information related to the traffic detection enhancement.

In some embodiments, the first description information includes at least one of: a media type; a connection ID; a stream ID in a connection; a frame type; a frame ID; or a designated specific field ID.

The second indication may be expressed as an indication of a QoS flow mapping enhancement, and indicate whether the QoS flow mapping enhancement is supported. If the second indication indicates that QoS flow mapping enhancement is supported, it means that the multiplexed service data flow within the single end-to-end connection may be mapped to one or more corresponding QoS flows.

The second description information may be expressed as a traffic detection enhancement description, and indicate information related to the QoS flow mapping enhancement.

In some embodiments, the second description information includes at least one of: a rule for mapping to a plurality of QoS flows; or an enhanced characteristic for mapping to a plurality of QoS flows.

In some embodiments, the enhanced characteristic for mapping to the plurality of QoS flows includes at least one of: a media type; a connection ID; a stream ID; a frame type; a frame ID; or a designated specific field ID.

In some embodiments, the PCF obtains the first information sent by the AF, where the first information includes the first indication and the first description information. The PCF may perform the policy decision based on the first indication and the first description information to determine whether a policy needs to be adjusted or a new policy needs to be generated. If the first indication indicates that the traffic detection enhancement is supported, it means that the multiplexed service data flow within the single end-to-end connection may be detected and identified based on the first description information, and mapped to one or more QoS flows.

In some embodiments, the PCF obtains the first information sent by the AF, where the first information includes the second indication and the second description information. The PCF may perform the policy decision based on the second indication and the second description information to determine whether the policy needs to be adjusted or a new policy needs to be generated. If the second indication indicates that the QoS flow mapping enhancement is supported, it means that the multiplexed service data flow within the single end-to-end connection may be detected and identified, and mapped to one or more QoS flows based on the second description information.

In some embodiments, the PCF obtains the first information sent by the AF, where the first information includes the first indication, the first description information, the second indication and the second description information. The PCF performs the policy decision based on the first indication, the first description information, the second indication and the second description information to determine whether a policy needs to be adjusted or a new policy needs to be generated. The multiplexed service data flow within the single end-to-end connection may be detected and identified based on the first description information, and mapped to one or more QoS flows based on the second description information.

In some embodiments, the first information sent by the AF and obtained by the PCF may further include encryption indication information.

In some embodiments, the first information sent by the AF and obtained by the PCF may further include XRM service information. Further, the XRM service information includes at least one of: a first service ID (multi-model service ID), where the first service identifier indicates an XRM service data flow or an XRM service data flow group, and may be used to identify all flows in an XRM service group; a UE address; a UE ID; an application ID of the second network element (AF identifier application ID); data flow description information (flow description(s)); a DNN); S-NSSAI; or a QoS parameter.

In some embodiments, the first network element PCF may receive the first information directly from the second network element AF, or may receive the first information sent by the second network element AF via a third network element.

The third network element is a network device with a network exposure function, for example, a NEF network element in the core network device.

In some embodiments, in a case where the AF is a trusted AF, the PCF may receive the first information directly from the AF. The trusted AF may refer to an authenticated AF provided by an operator or other trusted entity.

In some embodiments, in a case where the AF is an untrusted AF, the PCF may receive the first information sent by the AF via the NEF.

In some embodiments, the AF may send a first message to the NEF, where the first message is configured to instruct the NEF to forward the first information to the first network element. The first message may be an AF request message, for example, the AF request message may be created via Nnef_AFsessionWithQoS_Create request, and the AF request message may carry the first information.

In some embodiments, the AF may send the AF request message to the NEF, where the AF request message may carry at least one of: the first indication, the first description information, the second indication, or the second description information. Further, the AF request message may also carry the encryption indication information and/or the XRM service information.

In some embodiments, after receiving the AF request message sent by the AF, the NEF may determine whether to authorize the AF request message. If the NEF authorizes the AF request message, the NEF may send the first information to the PCF via a second message. The second message may be a request message created via Npcf_PolicyAuthorization_Create request, and the second message carries the first information.

In some embodiments, upon receiving the AF request message sent by the AF, the NEF may further perform a relevant mapping based on the first information. The relevant mapping may include at least one of: a mapping of an XRM service to a DNN, e.g., a mapping of a service ID of the XRM service to the DNN; a mapping of an XRM service to S-NSSAI, e.g., a mapping of a service ID of the XRM service to the S-NSSAI; a mapping of an external application to a CN application ID; a mapping of an external UE ID to a CN-internal UE ID, e.g., a mapping of the external UE ID to the CN-internal UE ID based on subscription information of a unified data management (UDM) network element; a mapping of an external XRM service group ID to a CN XRM service group ID, e.g., a mapping of an external XRM service group ID to a CN XRM service group ID based on subscription information of the UDM.

In some embodiments, the PCF may receive the second message from the NEF, and then perform the policy decision based on the first information provided by the AF and carried in the second message.

In some embodiments, after receiving the AF request message sent by the AF, the NEF may further determine whether to trigger a sixth network element based on the first information, and send the first information to the PCF via the sixth network element. The sixth network element may be a traffic steering control traffic steering function (TSCTSF) network element.

In some embodiments, the PCF may receive the first information via the sixth network element TSCTSF, and then perform the policy decision based on the first information.

In the above embodiment, the PCF may receive the first information provided by the AF via the NEF to perform the policy decision based on the first information. Accordingly, the multiplexed service data flow within the single end-to-end connection may be identified and mapped to one or more corresponding QoS flows.

In some embodiments, after the first network element PCF obtains the first information sent by the second network element, performing the policy decision based on the first information includes: generating or updating a PCC rule based on the first information.

In some embodiments, after performing the policy decision based on the first information, the first network element PCF may send second information to the second network element AF, where the second information includes response information to the QoS requirement carried in the first information.

In some embodiments, if the PCF may communicate directly with the AF, the PCF may receive the first information directly from the AF, and then perform the policy decision based on the first information. Then, the PCF may directly reply with the second information to the AF.

In some embodiments, if forwarding via the NEF is required between the PCF and the AF, the PCF may obtain the first information sent by the AF from the NEF, and then perform the policy decision based on the first information. Then, the PCF may send the second information to the NEF, and the NEF forwards the second information to the AF. For example, the PCF may send the second information to the NEF via Npcf_Policy Authorization_Create response, and the NEF sends the second information to the AF via Nnef_AFsessionWithQoS_Create response, where the second information may include a result of the policy decision performed by the PCF based on the first information, and an authorization result for the AF request message.

In some embodiments, after performing the policy decision based on the first information and generating or updating the PCC rule, the PCF may determine whether to send the generated or updated PCC rule to a fourth network element. If the PCF determines to send the generated or updated PCC rule to the fourth network element, the PCF may trigger an SM policy association modification request operation.

The fourth network element is a network device responsible for managing session information, for example, an SMF network element in the core network device.

In some embodiments, after generating or updating the PCC rule based on the first information, the PCF may send third information to the SMF, where the third information indicates the updated PCC rule or the generated new PCC rule. For example, the PCF may send the third information to the SMF via an SM policy association modification request.

In some embodiments, the third information may indicates at least one of: the first indication indicating support for the traffic detection enhancement; the first description information including information related to the traffic detection enhancement; the second indication indicating support for the QoS flow mapping enhancement; or the second description information including information related to the QoS flow mapping enhancement.

In some embodiments, after sending the third information to the SMF, the PCF may receive fourth information from the SMF, where the fourth information is response information to the third information. For example, the PCF may receive the fourth information from the SMF via an SM policy association modification response.

In some embodiments, after receiving the third information sent by the first network element PCF, the fourth network element SMF may send fifth information to a fifth network element, where the fifth information indicates the QoS rule and/or the QoS group parameter.

The fifth network element may be a network device responsible for transmission and processing of user data traffic, for example, an UPF network element in the core network device.

The fifth information may include at least one of: the first indication indicating support for the traffic detection enhancement; the first description information including information related to the traffic detection enhancement; the second indication indicating support for the QoS flow mapping enhancement; or the second description information including information related to the QoS flow mapping enhancement.

In some embodiments, the SMF may transmit the fifth information to the UPF via an N4 session, for example, send the fifth information to the UPF via an N4 session modification request.

In some embodiments, after receiving the fifth information from the SMF, the UPF may perform a traffic detection based on the fifth information.

In some embodiments, after receiving the fifth information from the SMF, the UPF may perform the traffic detection based on the fifth information to identify QoS characteristics of PDUs or PDU sets with different features in a data flow, and map, based on the fifth information and a traffic detection result, one or more multiplexed data flows of different media types within the single end-to-end transmission connection to one or more QoS flows.

In some embodiments, the UPF may perform the traffic detection and map the multiplexed data flow of different media types within the single end-to-end transmission connection to one or more QoS flows based on the received fifth information, operations, administration, and maintenance (OAM) configurations, and a usage policy.

In some embodiments, after receiving the third information sent by the first network element PCF, the fourth network element SMF may further send sixth information to a seventh network element so that the SMF may correspondingly modify a session based on the third information. The sixth information indicates the QoS rule and/or the QoS group parameter. The seventh network element is thus enabled to send the sixth information to a terminal via an access network device (RAN/AN).

The seventh network element is a network device that handles user access and mobility management, for example, an access and mobility management function (AMF) network element in the core network device.

For example, the SMF may send the sixth information to the AMF via Namf_Communication_N1N2MessageTransfer.

In some embodiments, the sixth information may include at least one of: a PDU session ID; a QFI; a QoS profile; or an N1 SM container.

In some embodiments, after receiving the sixth information from the SMF, the AMF sends an N2 message to the access network device, such as an N2 PDU session request. The N2 message indicates the sixth information received from the SMF, so that the access network device performs relevant resource setup with the terminal based on the sixth information.

The access network device may send an N2 PDU session Ack message to the AMF as a response message to the N2 PDU session request.

In some embodiments, the AMF may forward information received from the access network device to the SMF by sending seventh information to the SMF, where the seventh information indicates a resource setup performed by the terminal based on the sixth information. For example, the AMF may forward the information received from the access network device to the SMF via Nsmf_PDUSession_UpdateSMContext.

In some embodiments, after receiving the seventh information sent by the AMF, the fourth network element SMF may send eighth information to the AMF, where the eighth information is a response message to the seventh information. For example, after receiving the Nsmf_PDUSession_UpdateSMContext message from the AMF, the SMF may reply with an Nsmf_PDUSession_UpdateSMContext response to the AMF.

In some embodiments, the fourth network element SMF may further determine to update the N4 session with the fifth network element UPF based on the seventh information received from the AMF. For example, the SMF may modify the involved N4 session by sending the N4 session modification request to the UPF, and obtain an N4 session modification response replied by the UPF.

In the above embodiment, after performing the policy decision based on the first information provided by the AF and generating or updating the PCC rule, the PCF may send the generated or updated PCC rule to the SMF, so that the SMF indicates the QoS rule and/or the QoS group parameter to the UPF. Accordingly, the UPF may perform the traffic detection on the multiplexed service data flow within the single end-to-end connection based on the QoS rule and/or the QoS group parameter and map the multiplexed service data flow to one or more corresponding QoS flows.

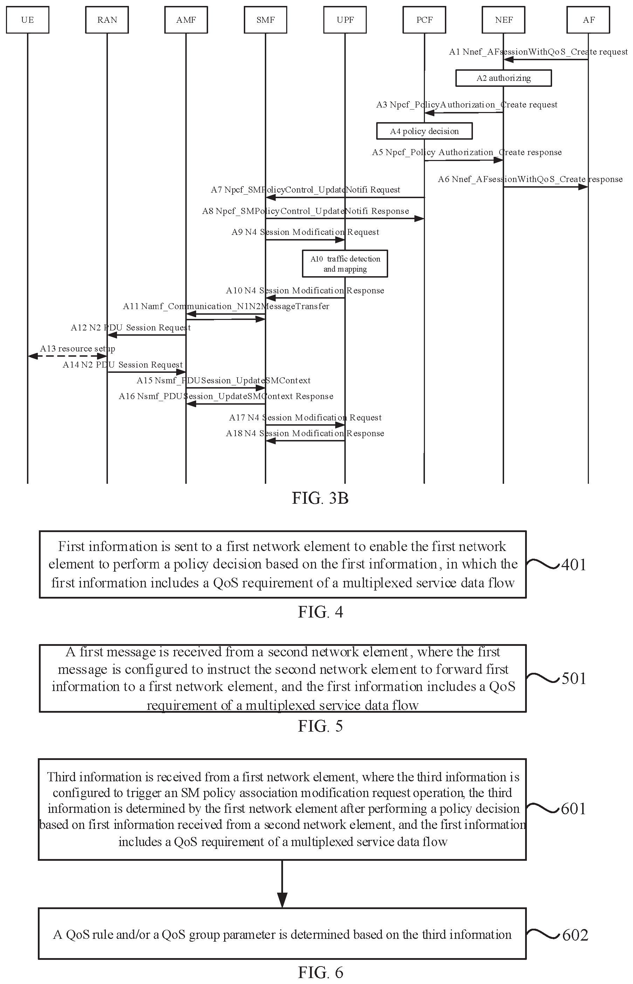

FIG. 3B is a schematic flowchart of a method for processing a service data flow according to an embodiment of the disclosure. As shown in FIG. 3B, the method for processing a service data flow provided by an embodiment of the disclosure includes the following steps.

A1. The AF sends an AF request message Nnef_AFsessionWithQoS_Create request to the NEF, where the AF request message carries the first information, and the first information may include at least one of: the first indication indicating support for the traffic detection enhancement; the first description information including information related to the traffic detection enhancement; the second indication indicating support for the QoS flow mapping enhancement; or the second description information including information related to the QoS flow mapping enhancement.

A2. The NEF authorizes the AF request message, and performs at least one of the following relevant mappings based on the first information: the mapping of the XRM service to the DNN; the mapping of the XRM service to the S-NSSAI; the mapping of the external application to the CN application ID; the mapping of the external UE ID to the CN-internal UE ID; or the mapping of the external XRM service group ID to the CN XRM service group ID.

A3. The NEF sends an Npcf_PolicyAuthorization_Create request message to the PCF, where the message carries the first information provided by the AF.

A4. The PCF performs the policy decision based on the received first information, and generates or updates the PCC rule.

A5. The PCF sends an Npcf_Policy Authorization_Create response message to the NEF, where the message includes the second information as a response to the AF request message.

A6. The NEF sends an Nnef_AFsessionWithQoS_Create response message to the AF, where the message includes the second information, and the second information includes the result of the policy decision performed by the PCF based on the first information and the authorization result for the AF request message.

A7. The PCF sends an Npcf_SMPolicyControl_UpdateNotifi Request message to the SMF, where the message carries the third information. The third information indicates the updated PCC rule or the generated new PCC rule. The third information may indicate at least one of: the first indication indicating support for the traffic detection enhancement; the first description information including information related to the traffic detection enhancement; the second indication indicating support for the QoS flow mapping enhancement; or the second description information including information related to the QoS flow mapping enhancement.

A8. The SMF replies with an Npcf_SMPolicyControl_UpdateNotifi Response message to the PCF, where the message carries the fourth information as response information to the received third information.

A9. The SMF sends an N4 session modification request message to the UPF, where the message carries the fifth information. The fifth information indicates the QoS rule and/or the QoS group parameter. The fifth information may include at least one of: the first indication indicating support for the traffic detection enhancement; the first description information including information related to the traffic detection enhancement; the second indication indicating support for the QoS flow mapping enhancement; or the second description information including information related to the QoS flow mapping enhancement.

A10. The UPF performs the traffic detection based on the fifth information and maps the multiplexed data flow of different media types within the single end-to-end transmission connection to one or more QoS flows. The UPF may also reply with an N4 session modification response message to the SMF.

A11. The SMF sends the sixth information to the AMF via Namf_Communication_N1N2MessageTransfer, where the sixth information indicates the QoS rule and/or the QoS group parameter. The sixth information may include at least one of: the PDU session ID; the QFI; the QoS profile; or the N1 SM container.

A12. The AMF sends an N2 PDU session request message to the RAN, where the message includes the sixth information.

A13. The RAN performs the resource setup with the terminal based on the sixth information.

A14. The RAN sends an N2 PDU session Ack message to the AMF as a response message to the N2 PDU session request.

A15. The AMF sends Nsmf_PDUSession_UpdateSMContext to the SMF, and forwards the seventh information received from the RAN to the SMF.

A16. The SMF replies with Nsmf_PDUSession_UpdateSMContext response to the AMF.

A17. The SMF sends an N4 session modification request to the UPF to modify the involved N4 session.

A18. The UPF replies with an N4 session modification response to the SMF.

A complete QoS enhancement processing procedure for the multiplexed service data flow initiated by the AF is implemented through the above steps A1-A18.

In a second aspect, embodiments of the disclosure provides a method for processing a service data flow. FIG. 4 is a schematic flowchart of a method for processing a service data flow according to an embodiment of the disclosure. The method for processing a service data flow shown in this embodiment may be performed by a second network element.

As shown in FIG. 4, the method for processing a service data flow may include the following steps.

At step S401, first information is sent to a first network element to enable the first network element to perform a policy decision based on the first information, in which the first information includes a QoS requirement of a multiplexed service data flow.

In some embodiments, the second network element may send the first information to the first network element, so that the first network element performs the policy decision based on the first information.

In an implementation, the multiplexed service data flow includes at least one of: an XRM service data flow; or an interactive media service data flow.

In an implementation, the first information includes at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In an implementation, the first description information includes at least one of: a media type; a connection ID; a stream ID; a frame type; a frame ID; or a designated specific field ID.

In an implementation, the second description information includes at least one of: a rule for mapping to a plurality of QoS flows; or an enhanced characteristic for mapping to a plurality of QoS flows.

In an implementation, the enhanced characteristic for mapping to the QoS flows includes at least one of: a media type; a connection ID; a stream ID; a frame type; a frame ID; or a designated specific field ID.

It should be noted that the embodiment shown in FIG. 4 may be implemented independently, or may be implemented in combination with at least one other embodiment of the disclosure, which may be selected according to needs, and the disclosure is not limited thereto.

According to embodiments of the disclosure, the second network element sends the first information to the first network element to enable the first network element to perform the policy decision based on the first information, in which the first information includes the QoS requirement of the multiplexed service data flow. Accordingly, the multiplexed service data flow within the single end-to-end connection may be identified and mapped to one or more corresponding QoS flows.

In some embodiments, the first information sent by the second network element to the first network element may further include encryption indication information.

In some embodiments, the first information sent by the second network element to the first network element may further include XRM service information. Further, the XRM service information includes at least one of: a first service ID (multi-model service ID), where the first service identifier indicates an XRM service data flow or an XRM service data flow group, and may be used to identify all flows in an XRM service group; a UE address; a UE ID; an application ID of the second network element (AF identifier application ID); data flow description information (flow description(s)); a DNN); S-NSSAI; or a QoS parameter.

In an implementation, the second network element is an untrusted network element. The second network element may send a first message to a third network element, where the first message is configured to instruct the third network element to forward the first information to the first network element. The first message may be an AF request message, and the AF request message may carry the first information.

In some embodiments, the AF request message sent by the second network element to the third network element may carry at least one of: the first indication, the first description information, the second indication, or the second description information. Further, the AF request message may also carry the encryption indication information and/or the XRM service information.

In some embodiments, after receiving the AF request message sent by the first network element, the third network element may determine whether to authorize the AF request message, and if the third network element authorizes the AF request message, the third network element may send the first information to the first network element via a second message.

In some embodiments, the PCF may receive the second message from the NEF, and then perform the policy decision based on the first information provided by the AF and carried in the second message.

In some embodiments, the second network element may receive second information sent by the first network element, where the second information includes response information to the QoS requirement.

In some embodiments, the second information may include a result of the policy decision performed by the PCF based on the first information, and an authorization result for the AF request message.

In an implementation, the second network element may receive the second information sent by the first network element via a third network element.

In a third aspect, embodiments of the disclosure provides a method for processing a service data flow. FIG. 5 is a schematic flowchart of a method for processing a service data flow according to an embodiment of the disclosure. The method for processing a service data flow shown in this embodiment may be performed by a third network element.

As shown in FIG. 5, the method for processing a service data flow may include the following steps.

At step S501, a first message is received from a second network element, where the first message is configured to instruct the second network element to forward first information to a first network element, and the first information includes a QoS requirement of a multiplexed service data flow.

In some embodiments, the third network element may receive the first message from the second network element, and forward the first information to the first network element, to enable the first network element to perform a policy decision based on the first information.

In some embodiments, the first description information includes at least one of: a media type; a connection ID; a stream ID; a frame type; a frame ID; or a designated specific field ID.

In some embodiments, the second description information includes at least one of: a rule for mapping to a plurality of QoS flows; or an enhanced characteristic for mapping to a plurality of QoS flows.

In some embodiments, the enhanced characteristic for mapping to the plurality of QoS flows includes at least one of: a media type; a connection ID; a stream ID; a frame type; a frame ID; or a designated specific field ID.

It should be noted that the embodiment shown in FIG. 5 may be implemented independently, or may be implemented in combination with at least one other embodiment of the disclosure, which may be selected according to needs, and the disclosure is not limited thereto.

According to embodiments of the disclosure, the third network element forwards the first information sent by the second network element to the first network element, to enable the first network element to perform the policy decision based on the first information. Accordingly, the multiplexed service data flow within the single end-to-end connection may be identified and mapped to one or more corresponding QoS flows.

In some embodiments, after receiving the first message from the second network element, the third network element may determine to authorize the first message, and send the first information to the first network element.

In some embodiments, the third network element may perform at least one of the following relevant mappings based on the received first information: a mapping of an XRM service to a DNN; a mapping of an XRM service to S-NSSAI; a mapping of an external application to a CN application ID; a mapping of an external UE ID to a CN-internal UE ID; or a mapping of an external XRM service group ID to a CN XRM service group ID.

In some embodiments, after receiving the first message sent by the second network element, the third network element may further determine whether to trigger a sixth network element based on the first information and send the first information to the PCF via the sixth network element. The first information is forwarded to the first network element by the sixth network element to enable the first network element to perform the policy decision based on the first information.

In some embodiments, the third network element may receive second information from the first network element, where the second information includes response information to the QoS requirement, and forward the second information to the second network element.

In a fourth aspect, embodiments of the disclosure provide a method for processing a service data flow. FIG. 6 is a schematic flowchart of a method for processing a service data flow according to an embodiment of the disclosure. The method for processing a service data flow shown in this embodiment may be performed by a fourth network element.

As shown in FIG. 6, the method for processing a service data flow may include the following steps.

At step S601, third information is received from a first network element, where the third information is configured to trigger an SM policy association modification request operation, the third information is determined by the first network element after performing a policy decision based on first information received from a second network element, and the first information includes a QoS requirement of a multiplexed service data flow.

In an implementation, the first network element may perform the policy decision based on the first information provided by the second network element to generate or update a PCC rule, and send third information to the fourth network element.

At step S602, a QoS rule and/or a QoS group parameter is determined based on the third information.

It should be noted that the embodiment shown in FIG. 6 may be implemented independently, or may be implemented in combination with at least one other embodiment of the disclosure, which may be selected according to needs, and the disclosure is not limited thereto.

According to embodiments of the disclosure, the fourth network element receives the third information from the first network element to determine the QoS rule and/or the QoS group parameter based on the third information. Accordingly, the multiplexed service data flow within the single end-to-end connection may be identified and mapped to one or more corresponding QoS flows.

In some embodiments, the third information indicates a PCC rule.

In some embodiments, the third information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the fourth network element may send fourth information to the first network element, where the fourth information is response information to the third information.

In some embodiments, the fourth network element may send fifth information to a fifth network element based on the third information, where the fifth information indicates the QoS rule and/or the QoS group parameter.

In some embodiments, the fourth network element may send the fifth information to the fifth network element via an N4 session.

In some embodiments, the fifth information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the fourth network element may send sixth information to a seventh network element to enable the seventh network element to send the sixth information to a terminal via an access network device, where the sixth information indicates the QoS rule and/or the QoS group parameter.

In some embodiments, the sixth information includes at least one of: a PDU session ID; a QFI; a QoS profile; or an N1 SM container.

In some embodiments, the fourth network element may receive seventh information from the seventh network element, where the seventh information indicates a resource setup performed by the terminal based on the sixth information.

In some embodiments, the fourth network element may send eighth information to the seventh network element, where the eighth information includes response information to the seventh information.

In some embodiments, the fourth network element may determine to update an N4 session with the fifth network element based on the seventh information.

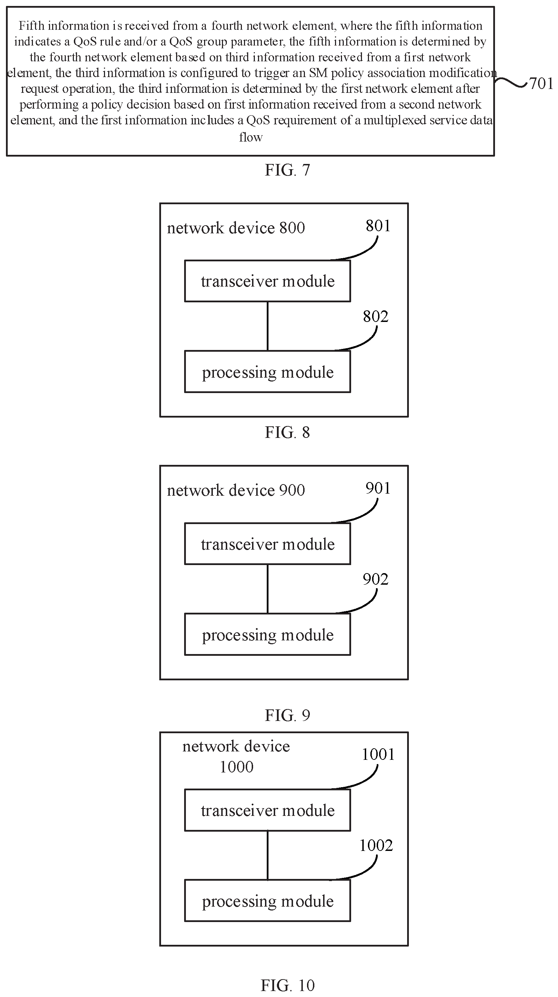

In a fifth aspect, embodiments of the disclosure provides a method for processing a service data flow. FIG. 7 is a schematic flowchart of a method for processing a service data flow according to an embodiment of the disclosure. The method for processing a service data flow shown in this embodiment may be performed by a fifth network element.

As shown in FIG. 7, the method for processing a service data flow may include the following steps.

At step S701, fifth information is received from a fourth network element, where the fifth information indicates a QoS rule and/or a QoS group parameter, the fifth information is determined by the fourth network element based on third information received from a first network element, the third information is configured to trigger an SM policy association modification request operation, the third information is determined by the first network element after performing a policy decision based on first information received from a second network element, and the first information includes a QoS requirement of a multiplexed service data flow.

It should be noted that the embodiment shown in FIG. 7 may be implemented independently, or may be implemented in combination with at least one other embodiment of the disclosure, which may be selected according to needs, and the disclosure is not limited thereto.

According to embodiments of the disclosure, the fifth network element receives the fifth information from the fourth network element, so that a traffic detection may be performed based on the fifth information, and the multiplexed service data flow within the single end-to-end connection may be identified and mapped to one or more corresponding QoS flows.

In some embodiments, the fifth network element may receive the fifth information from the fourth network element via an N4 session.

In some embodiments, the fifth information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the fifth network element may perform the traffic detection based on the fifth information.

In some embodiments, the fifth network element may map, based on the fifth information and a traffic detection result, one or more multiplexed data flows of different media types within a single end-to-end transmission connection to one or more QoS flows.

In some embodiments, the names of information and the like are not limited to those recited in the embodiments, and terms such as "information", "message", "signal", "signaling", "report", "configuration", "indication", "instruction", "command", "channel", "parameter", "domain", "field", "symbol", "codebook", "codeword", "codepoint", "bit", "data", "program", "chip" may be used interchangeably.

In some embodiments, terms such as "time instant", "time point", "time", "time position" may be used interchangeably, and terms such as "duration", "time period", "time window", "window", "time" may be used interchangeably.

In some embodiments, terms such as "component carrier (CC)", "cell", "frequency carrier", and "carrier frequency" may be used interchangeably.

In some embodiments, "acquire", "obtain", "get", "receive", "transmit", "two-way transmission", "send and/or receive" may be used interchangeably, which may be interpreted as receiving from another entity, obtaining from a protocol, obtaining from a higher layer, deriving through self-processing, implementing autonomously, and other meanings.

In some embodiments, terms such as "send", "transmit", "report", "deliver", "transmit", "two-way transmission", "send and/or receive" may be used interchangeably.

Corresponding to the foregoing embodiments of the method for processing a service data flow, the disclosure further provides embodiments of a terminal and a network device.

Embodiments of the disclosure further provides a network device, including: one or more processors; and a memory coupled to the one or more processors, where executable instructions are stored on the memory, and when the executable instructions are executed by the one or more processors, the network device is caused to perform the method for processing a service data flow described in the foregoing embodiments.

FIG. 8 is a schematic block diagram of a network device shown according to an embodiment of the disclosure. As shown in FIG. 8, a network device 800 may be an apparatus for processing a service data flow, and the apparatus includes a transceiver module 801 and a processing module 802.

In some embodiments, the transceiver module 801 is configured to receive first information sent by a second network element, where the first information includes a QoS requirement of a multiplexed service data flow; and the processing module 802 is configured to perform a policy decision based on the first information.

In some embodiments, the multiplexed service data flow includes at least one of: an XRM service data flow; or an interactive media service data flow.

In some embodiments, the first information includes at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the first description information includes at least one of: a media type; a connection ID; a stream ID; a frame type; a frame ID; or a designated specific field ID.

In some embodiments, the second description information includes at least one of: a rule for mapping to a plurality of QoS flows; or an enhanced characteristic for mapping to a plurality of QoS flows.

In some embodiments, the enhanced characteristic for mapping to the plurality of QoS flows includes at least one of: a media type; a connection ID; a stream ID; a frame type; a frame ID; or a designated specific field ID.

In some embodiments, the first information further includes at least one of: encryption indication information; or XRM service information.

In some embodiments, the XRM service information includes at least one of: a first service ID indicating an XRM service data flow or an XRM service data flow group; a UE address; a UE ID; an application ID of the second network element; data flow description information; a DNN; S-NSSAI; or a QoS parameter.

In some embodiments, the transceiver module 801 is configured to receive the first information via a third network element, in which the first information is sent by the second network element to the third network element.

In some embodiments, the transceiver module 801 is configured to receive the first information via a sixth network element, in which the first information is sent by the third network element to the sixth network element.

In some embodiments, the processing module 802 is configured to generate or update a PCC rule based on the first information.

In some embodiments, the transceiver module 801 is configured to send second information to the second network element, in which the second information includes response information to the QoS requirement.

In some embodiments, the transceiver module 801 is configured to send the second information to the second network element via a third network element.

In some embodiments, the transceiver module 801 is configured to trigger an SM policy association modification request operation.

In some embodiments, the transceiver module 801 is configured to send third information to a fourth network element, in which the third information indicates the PCC rule.

In some embodiments, the third information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the transceiver module 801 is configured to receive fourth information from the fourth network element, in which the fourth information is response information to the third information.

In some embodiments, the first network element is a PCF network element.

In some embodiments, the second network element is an AF network element.

In some embodiments, the third network element is a NEF network element.

In some embodiments, the fourth network element is an SMF network element.

In some embodiments, the fifth network element is an UPF network element.

It should be noted that the modules included in the terminal are not limited to those described in the foregoing embodiments, and may further include other modules, such as a storage module, a display module, and the like.

FIG. 9 is a schematic block diagram of a network device shown according to an embodiment of the disclosure. As shown in FIG. 9, a network device 900 may be an apparatus for processing a service data flow, and the apparatus includes a transceiver module 901 and a processing module 902.

In some embodiments, the processing module 902 is configured to determine first information, where the first information includes a QoS requirement of a multiplexed service data flow; and the transceiver module 901 is configured to send the first information to a first network element to enable the first network element to perform a policy decision based on the first information

In some embodiments, the multiplexed service data flow includes at least one of: an XRM service data flow; or an interactive media service data flow.

In some embodiments, the first information includes at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the first description information includes at least one of: a media type; a connection ID; a stream ID; a frame type; a frame ID; or a designated specific field ID.

In some embodiments, the second description information includes at least one of: a rule for mapping to a plurality of QoS flows; or an enhanced characteristic for mapping to a plurality of QoS flows.

In some embodiments, the enhanced characteristic for mapping to the plurality of QoS flows includes at least one of: a media type; a connection ID; a stream ID; a frame type; a frame ID; or a designated specific field ID.

In some embodiments, the second network element is a non-trusted network element. The transceiver module 902 is configured to send a first message to a third network element, in which the first message is configured to instruct the third network element to forward the first information to the first network element.

In some embodiments, the transceiver module 901 is configured to receive second information sent by the first network element, in which the second information includes response information to the QoS requirement.

In some embodiments, the transceiver module 901 is configured to receive the second information via a third network element.

It should be noted that the modules included in the network device are not limited to those described in the foregoing embodiments, and may further include other modules, such as a storage module, a display module, and the like.

FIG. 10 is a schematic block diagram of a network device shown according to an embodiment of the disclosure. As shown in FIG. 10, a network device 1000 may be an apparatus for processing a service data flow, and the apparatus includes a transceiver module 1001 and a processing module 1002.

In some embodiments, the transceiver module 1001 is configured to receive a first message from a second network element, in which the first message is configured to instruct the second network element to forward first information to a first network element, and the first information includes a QoS requirement of a multiplexed service data flow.

In some embodiments, first description information includes at least one of: a media type; a connection ID; a stream ID; a frame type; a frame ID; or a designated specific field ID.

In some embodiments, second description information includes at least one of: a rule for mapping to a plurality of QoS flows; or an enhanced characteristic for mapping to a plurality of QoS flows.

In some embodiments, the enhanced characteristic for mapping to the plurality of QoS flows includes at least one of: a media type; a connection ID; a stream ID; a frame type; a frame ID; or a designated specific field ID.

In some embodiments, the processing module 1002 is configured to determine to authorize the first message; and the transceiver module 1001 is configured to send the first information to the first network element.

In some embodiments, the processing module 1002 is configured to perform, based on the first information, at least one of the following relevant mappings: a mapping of an XRM service to a DNN; a mapping of an XRM service to S-NSSAI; a mapping of an external application to a CN application ID; a mapping of an external UE ID to a CN-internal UE ID; or a mapping of an external XRM service group ID to a CN XRM service group ID.

In some embodiments, the transceiver module 1001 is configured to forward the first information to the first network element via a sixth network element.

In some embodiments, the transceiver module 1001 is configured to receive second information from the first network element, in which the second information includes response information to the QoS requirement; and forwarding the second information to the second network element.

It should be noted that the modules included in the network device are not limited to those described in the foregoing embodiments, and may further include other modules, such as a storage module, a display module, and the like.

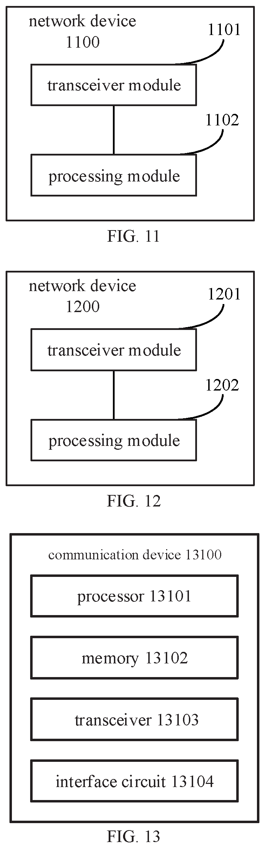

FIG. 11 is a schematic block diagram of a network device shown according to an embodiment of the disclosure. As shown in FIG. 11, a network device 1100 may be an apparatus for processing a service data flow, and the apparatus includes a transceiver module 1101 and a processing module 1102.

In some embodiments, the transceiver module 1101 is configured to receive third information from a first network element, in which the third information is configured to trigger an SM policy association modification request operation, the third information is determined by the first network element after performing a policy decision based on first information received from a second network element, and the first information includes a QoS requirement of a multiplexed service data flow; and the processing module 1102 is configured to determine at least one of a QoS rule or a QoS group parameter based on the third information.

In some embodiments, the third information indicates a PCC rule.

In some embodiments, the third information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the transceiver module 1101 is configured to send fourth information to the first network element, in which the fourth information is response information to the third information.

In some embodiments, the transceiver module 1101 is configured to send fifth information to a fifth network element based on the third information, in which the fifth information indicates at least one of the QoS rule or the QoS group parameter.

In some embodiments, the transceiver module 1101 is configured to send the fifth information to the fifth network element via an N4 session.

In some embodiments, the fifth information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the transceiver module 1101 is configured to send sixth information to a seventh network element to enable the seventh network element to send the sixth information to a terminal via an access network device, in which the sixth information indicates at least one of the QoS rule or the QoS group parameter.

In some embodiments, the sixth information includes at least one of: a PDU session ID; a QFI; a QoS profile; or an N1 SM container.

In some embodiments, the transceiver module 1101 is configured to receive seventh information from the seventh network element, in which the seventh information indicates a resource setup performed by the terminal based on the sixth information.

In some embodiments, the transceiver module 1101 is configured to send eighth information to the seventh network element, in which the eighth information includes response information to the seventh information.

In some embodiments, the processing module 1102 is configured to determine, based on the seventh information, to update an N4 session with the fifth network element.

It should be noted that the modules included in the network device are not limited to those described in the foregoing embodiments, and may further include other modules, such as a storage module, a display module, and the like.

FIG. 12 is a schematic block diagram of a network device shown according to an embodiment of the disclosure. As shown in FIG. 12, a network device 1200 may be an apparatus for processing a service data flow, and the apparatus includes a transceiver module 1201 and a processing module 1202.

In some embodiments, the transceiver module 1201 is configured to receive fifth information from a fourth network element, in which the fifth information indicates at least one of a QoS rule or a QoS group parameter, the fifth information is determined by the fourth network element based on third information received from a first network element, the third information is configured to trigger an SM policy association modification request operation, the third information is determined by the first network element after performing a policy decision based on first information received from a second network element, and the first information includes a QoS requirement of a multiplexed service data flow.

In some embodiments, receiving the fifth information from the fourth network element includes: receiving the fifth information from the fourth network element via an N4 session.

In some embodiments, the fifth information indicates at least one of: a first indication indicating support for a traffic detection enhancement; first description information including information related to the traffic detection enhancement; a second indication indicating support for a QoS flow mapping enhancement; or second description information including information related to the QoS flow mapping enhancement.

In some embodiments, the processing module 1202 is configured to perform a traffic detection based on the fifth information.

In some embodiments, the processing module 1202 is configured to map, based on the fifth information and a traffic detection result, one or more multiplexed data flows of different media types within a single end-to-end transmission connection to one or more QoS flows.

It should be noted that the modules included in the network device are not limited to those described in the foregoing embodiments, and may further include other modules, such as a storage module, a display module, and the like.

Since apparatus embodiments basically correspond to the method embodiments, reference may be made to partial descriptions of the method embodiments for the relevant parts. The apparatus embodiments described above are merely illustrative, in which the modules described as separate components may or may not be physically separated, and a component shown as a module may or may not be a physical module, that is, the component may be located in one place, or may be distributed to a plurality of network modules. Some or all of the modules may be selected according to actual needs to achieve the objectives of the solutions of the embodiments. Those of ordinary skill in the art can understand and implement them without creative efforts.

Embodiments of the disclosure further provide a communication device, including: one or more processors; and a memory coupled to the processor, where executable instructions are stored on the memory, and when the executable instructions are executed by the one or more processors, the one or more processors are caused to invoke the executable instructions to enable the communication device to perform the method for processing a service data flow described in the foregoing optional embodiments.

Embodiments of the disclosure further provide a communication system, including a first network element, a second network element, a third network element, a fourth network element and a fifth network element, in which the first network element is configured to implement the method for processing a service data flow described in the foregoing optional embodiments, the second network element is configured to implement the method for processing a service data flow described in the foregoing optional embodiments, the third network element is configured to implement the method for processing a service data flow described in the foregoing optional embodiments, the fourth network element is configured to implement the method for processing a service data flow described in the foregoing optional embodiments, and the fifth network element is configured to implement the method for processing a service data flow described in the foregoing optional embodiments.

Embodiments of the disclosure further provide a storage medium, where instructions are stored in the storage medium, and when the instructions run on a communication device, the communication device is caused to perform the method for processing a service data flow described in the foregoing optional embodiments.

Embodiments of the disclosure further provide an apparatus for implementing any one of the above methods. For example, an apparatus is provided, where the apparatus includes units or modules for implementing the steps performed by a terminal in any one of the above methods. For another example, another apparatus is further provided, including units or modules for implementing the steps performed by a network device (such as an access network device, a core network function node, a core network device, etc.) in any one of the above methods.

It should be understood that the division of each unit or module in the above apparatus is only a division of logical functions, which may be fully or partially integrated into a physical entity or physically separated in actual implementation. Moreover, the units or modules in the apparatus may be implemented in the form of calling software by a processor: for example, the apparatus includes a processor, which is connected with a memory, and instructions are stored in the memory, and the processor calls the instructions stored in the memory to implement any of the above methods or implement the functions of the units or modules of the apparatus, in which the processor is a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above apparatus may be implemented entirely in the form of calling software by the processor, or entirely in the form of hardware circuits, or partially in the form of calling software by a processor, and the rest is implemented in the form of hardware circuits.

In embodiments of the disclosure, the processor is a circuit with signal processing capability. In an implementation, the processor may be a circuit with instruction reading and running capability, such as a CPU, a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an ASIC or a PLD, such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 13 is a schematic diagram of a communication device 13100 provided by an embodiment of the disclosure. The communication device 13100 may be a network device (such as an access network device, a core network device, etc.), a terminal (such as a UE, etc.), a chip, a chip system, or a processor that supports a network device to implement any one of the above methods, or a chip, a chip system, or a processor that supports a terminal to implement any one of the above methods. The communication device 13100 may be configured to implement the method described in the foregoing method embodiments, and reference may be made to the descriptions in the foregoing method embodiments for details.

As shown in FIG. 13, the communication device 13100 includes one or more processors 13101. The processor 13101 may be a general-purpose processor or a dedicated processor, such as a baseband processor or a central processing unit. The baseband processor may be configured to process communication protocols and communication data, and the central processing unit may be configured to control a communication apparatus (such as a base station, a baseband chip, a terminal device, a terminal device chip, a DU or a CU, etc.), execute a program, and process program data. The processor 13101 is configured to invoke instructions to cause the communication device 13100 to perform any one of the above methods.

In some embodiments, the communication device 13100 further includes one or more memories 13102 configured to store instructions. In some embodiments, all or part of the memory 13102 may also be located outside the communication device 13100.

In some embodiments, the communication device 13100 further includes one or more transceivers 13103. When the communication device 13100 includes one or more transceivers 13103, communication steps such as sending and receiving in the above method are performed by the transceiver 13103, and other steps are performed by the processor 13101.

In some embodiments, the transceiver may include a receiver and/or a transmitter, and the receiver and the transmitter may be separate or integrated together. In some embodiments, terms such as transceiver, transceiver unit, transceiver machine, and transceiver circuit may be used interchangeably; terms such as transmitter, transmitting unit, transmitter machine, and transmitting circuit may be used interchangeably; and terms such as receiver, receiving unit, receiver machine, and receiving circuit may be used interchangeably.

In some embodiments, the communication device 13100 further includes one or more interface circuits 13104. The interface circuit 13104 is connected to the memory 13102. The interface circuit 13104 may be configured to receive signals from the memory 13102 or other apparatuses and send signals to the memory 13102 or other apparatuses. For example, the interface circuit 13104 may read instructions stored in the memory 13102 and send the instructions to the processor 13101.

The communication device 13100 described in the above embodiments may be a network device or a terminal, but the scope of the communication device 13100 described in the disclosure is not limited thereto, and the structure of the communication device 13100 may not be limited by FIG. 13. The communication device may be a stand-alone device or a part of a larger device. For example, the communication device may be: (1) a stand-alone integrated circuit (IC), or a chip, or a chip system or subsystem; (2) a set having one or more ICs, and optionally, the above IC set may further include a storage component for storing data and programs; (3) an ASIC, such as a modem; (4) a module that can be embedded in other devices; (5) a receiver, a terminal, an intelligent terminal, a cellular phone, a wireless device, a handset, a mobile unit, a vehiclemounted device, a network device, a cloud device, an artificial intelligence device, etc.; (6) others.

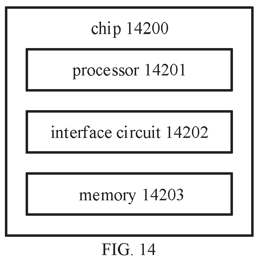

FIG. 14 is a schematic diagram of a chip 14200 provided by an embodiment of the disclosure. For the case where the communication device 13100 may be a chip or a chip system, reference may be made to the schematic diagram of the chip 14200 shown in FIG. 14, but is not limited thereto.

The chip 14200 includes one or more processors 14201, and the processor 14201 is configured to invoke instructions to cause the chip 14200 to perform any one of the above methods.

In some embodiments, the chip 14200 further includes one or more interface circuits 14202. The interface circuit 14202 is connected to the memory 14203. The interface circuit 14202 may be configured to receive signals from the memory 14203 or other apparatuses, and the interface circuit 14202 may be configured to send signals to the memory 14203 or other apparatuses. For example, the interface circuit 14202 may read instructions stored in the memory 14203 and send the instructions to the processor 14201. In some embodiments, terms such as interface circuit, interface, transmit/receive pin, and transceiver may be replaced with each other.

In some embodiments, the chip 14200 further includes one or more memories 14203 configured to store instructions. In some embodiments, all or part of the memory 14203 may be located outside the chip 14200.

The disclosure further provides a storage medium having instructions stored thereon, where the instructions, when run on the communication device 13100, cause the communication device 13100 to perform any one of the above methods. In some embodiments, the storage medium is an electronic storage medium. In some embodiments, the storage medium is a computer-readable storage medium, but is not limited thereto, and may also be a storage medium readable by other apparatuses. In some embodiments, the storage medium may be a non-transitory storage medium, but is not limited thereto, and may also be a transitory storage medium.

The disclosure further provides a program product which, when executed by the communication device 13100, causes the communication device 13100 to perform any one of the above methods. In some embodiments, the program product is a computer program product.

The disclosure further provides a computer program which, when run on a computer, causes the computer to perform any one of the above methods.

## Claims

1. A method for processing a service data flow, performed by a first network element, comprising:
receiving first information sent by a second network element, wherein the first information comprises a quality of service (QoS) requirement of a multiplexed service data flow; and
performing a policy decision based on the first information.

2. The method according to claim 1, wherein the multiplexed service data flow comprises at least one of:
an extended reality media (XRM) service data flow; or
an interactive media service data flow.

3. The method according to claim 1 or 2, wherein the first information comprises at least one of:
a first indication indicating support for a traffic detection enhancement;
first description information comprising information related to the traffic detection enhancement;
a second indication indicating support for a QoS flow mapping enhancement; or
second description information comprising information related to the QoS flow mapping enhancement.

4. The method according to claim 3, wherein the first description information comprises at least one of:
a media type;
a connection identifier (ID);
a stream ID;
a frame type;
a frame ID; or
a designated specific field ID.

5. The method according to claim 3, wherein the second description information comprises at least one of:
a rule for mapping to a plurality of QoS flows; or
an enhanced characteristic for mapping to a plurality of QoS flows.

6. The method according to claim 5, wherein the enhanced characteristic for mapping to the plurality of QoS flows comprises at least one of:
a media type;
a connection ID;
a stream ID;
a frame type;
a frame ID; or
a designated specific field ID.

7. The method according to any one of claims 3 to 6, wherein the first information further comprises at least one of:
encryption indication information; or
XRM service information.

8. The method according to claim 7, wherein the XRM service information comprises at least one of:
a first service ID indicating an XRM service data flow or an XRM service data flow group;
a user equipment (UE) address;
a UE ID;
an application ID of the second network element;
data flow description information;
a data network name (DNN);
single-network slice selection assistance information (S-NSSAI); or
a QoS parameter.

9. The method according to any one of claims 1 to 8, wherein receiving the first information sent by the second network element comprises:
receiving the first information via a third network element, wherein the first information is sent by the second network element to the third network element.

10. The method according to claim 9, wherein receiving the first information via the third network element comprises:
receiving the first information via a sixth network element, wherein the first information is sent by the third network element to the sixth network element.

11. The method according to any one of claims 1 to 10, wherein performing the policy decision based on the first information comprises:
generating or updating a policy and charging control (PCC) rule based on the first information.

12. The method according to claim 11, further comprising:
sending second information to the second network element, wherein the second information comprises response information to the QoS requirement.

13. The method according to claim 12, wherein sending the second information to the second network element comprises:
sending the second information to the second network element via a third network element.

14. The method according to any one of claims 11 to 13, further comprising:
triggering a session management (SM) policy association modification request operation.

15. The method according to claim 14, wherein triggering the SM policy association modification request operation comprises:
sending third information to a fourth network element, wherein the third information indicates the PCC rule.

16. The method according to claim 15, wherein the third information indicates at least one of:
a first indication indicating support for a traffic detection enhancement;
first description information comprising information related to the traffic detection enhancement;
a second indication indicating support for a QoS flow mapping enhancement; or
second description information comprising information related to the QoS flow mapping enhancement.

17. The method according to claim 15, further comprising:
receiving fourth information from the fourth network element, wherein the fourth information is response information to the third information.

18. The method according to any one of claims 1 to 17, wherein the first network element is a policy control function (PCF) network element.

19. The method according to any one of claims 1 to 18, wherein the second network element is an application function (AF) network element.

20. The method according to any one of claims 1 to 19, wherein the third network element is a network exposure function (NEF) network element.

21. The method according to any one of claims 1 to 20, wherein the fourth network element is a session management function (SMF) network element.

22. The method according to any one of claims 1 to 21, wherein the fifth network element is a user plane function (UPF) network element.

23. A method for processing a service data flow, performed by a second network element, comprising:
sending first information to a first network element to enable the first network element to perform a policy decision based on the first information, wherein the first information comprises a quality of service (QoS) requirement of a multiplexed service data flow.

24. The method according to claim 23, wherein the multiplexed service data flow comprises at least one of:
an extended reality media (XRM) service data flow; or
an interactive media service data flow.

25. The method according to claim 23 or 24, wherein the first information comprises at least one of:
a first indication indicating support for a traffic detection enhancement;
first description information comprising information related to the traffic detection enhancement;
a second indication indicating support for a QoS flow mapping enhancement; or
second description information comprising information related to the QoS flow mapping enhancement.

26. The method according to claim 25, wherein the first description information comprises at least one of:
a media type;
a connection identifier (ID);
a stream ID;
a frame type;
a frame ID; or
a designated specific field ID.

27. The method according to claim 25, wherein the second description information comprises at least one of:
a rule for mapping to a plurality of QoS flows; or
an enhanced characteristic for mapping to a plurality of QoS flows.

28. The method according to claim 27, wherein the enhanced characteristic for mapping to the plurality of QoS flows comprises at least one of:
a media type;
a connection ID;
a stream ID;
a frame type;
a frame ID; or
a designated specific field ID.

29. The method according to any one of claims 23 to 28, wherein the second network element is a non-trusted network element,
and sending the first information to the first network element comprises:
sending a first message to a third network element, wherein the first message is configured to instruct the third network element to forward the first information to the first network element.

30. The method according to any one of claims 23 to 29, further comprising:
receiving second information sent by the first network element, wherein the second information comprises response information to the QoS requirement.

31. The method according to claim 30, wherein receiving the second information sent by the first network element comprises:
receiving the second information via a third network element.

32. A method for processing a service data flow, performed by a third network element, comprising:
receiving a first message from a second network element, wherein the first message is configured to instruct the second network element to forward first information to a first network element, and the first information comprises a quality of service (QoS) requirement of a multiplexed service data flow.

33. The method according to claim 32, wherein first description information comprises at least one of:
a media type;
a connection identifier (ID);
a stream ID;
a frame type;
a frame ID; or
a designated specific field ID.

34. The method according to claim 33, wherein second description information comprises at least one of:
a rule for mapping to a plurality of QoS flows; or
an enhanced characteristic for mapping to a plurality of QoS flows.

35. The method according to claim 34, wherein the enhanced characteristic for mapping to the plurality of QoS flows comprises at least one of:
a media type;
a connection ID;
a stream ID;
a frame type;
a frame ID; or
a designated specific field ID.

36. The method according to any one of claims 32 to 35, further comprising:
determining to authorize the first message; and
sending the first information to the first network element.

37. The method according to any one of claims 32 to 36, further comprising:
performing, based on the first information, at least one of the following relevant mappings:
a mapping of an extended reality media (XRM) service to a data network name (DNN);
a mapping of an XRM service to single-network slice selection assistance information (S-NSSAI);
a mapping of an external application to a core network (CN) application ID;
a mapping of an external user equipment (UE) ID to a CN-internal UE ID; or
a mapping of an external XRM service group ID to a CN XRM service group ID.

38. The method according to claim 37, wherein sending the first information to the first network element comprises:
forwarding the first information to the first network element via a sixth network element.

39. The method according to any one of claims 32 to 38, further comprising:
receiving second information from the first network element, wherein the second information comprises response information to the QoS requirement; and
forwarding the second information to the second network element.

40. A method for processing a service data flow, performed by a fourth network element, comprising:
receiving third information from a first network element, wherein the third information is configured to trigger a session management (SM) policy association modification request operation, the third information is determined by the first network element after performing a policy decision based on first information received from a second network element, and the first information comprises a quality of service (QoS) requirement of a multiplexed service data flow; and
determining at least one of a QoS rule or a QoS group parameter based on the third information.

41. The method according to claim 40, wherein the third information indicates a policy and charging control (PCC) rule.

42. The method according to claim 40, wherein the third information indicates at least one of:
a first indication indicating support for a traffic detection enhancement;
first description information comprising information related to the traffic detection enhancement;
a second indication indicating support for a QoS flow mapping enhancement; or
second description information comprising information related to the QoS flow mapping enhancement.

43. The method according to any one of claims 40 to 42, further comprising:
sending fourth information to the first network element, wherein the fourth information is response information to the third information.

44. The method according to any one of claims 40 to 43, further comprising:
sending fifth information to a fifth network element based on the third information, wherein the fifth information indicates at least one of the QoS rule or the QoS group parameter.

45. The method according to claim 44, wherein sending the fifth information to the fifth network element comprises:
sending the fifth information to the fifth network element via an N4 session.

46. The method according to claim 44 or 45, wherein the fifth information indicates at least one of:
a first indication indicating support for a traffic detection enhancement;
first description information comprising information related to the traffic detection enhancement;
a second indication indicating support for a QoS flow mapping enhancement; or
second description information comprising information related to the QoS flow mapping enhancement.

47. The method according to any one of claims 44 to 46, further comprising:
sending sixth information to a seventh network element to enable the seventh network element to send the sixth information to a terminal via an access network device, wherein the sixth information indicates at least one of the QoS rule or the QoS group parameter.

48. The method according to claim 47, wherein the sixth information comprises at least one of:
a protocol data unit (PDU) session identifier (ID);
a QoS flow identifier (QFI);
a QoS profile; or
an N1 SM container.

49. The method according to claim 47 or 48, further comprising:
receiving seventh information from the seventh network element, wherein the seventh information indicates a resource setup performed by the terminal based on the sixth information.

50. The method according to claim 49, further comprising:
sending eighth information to the seventh network element, wherein the eighth information comprises response information to the seventh information.

51. The method according to claim 49, further comprising:
determining, based on the seventh information, to update an N4 session with the fifth network element.

52. A method for processing a service data flow, performed by a fifth network element, comprising:
receiving fifth information from a fourth network element, wherein the fifth information indicates at least one of a quality of service (QoS) rule or a QoS group parameter, the fifth information is determined by the fourth network element based on third information received from a first network element, the third information is configured to trigger a session management (SM) policy association modification request operation, the third information is determined by the first network element after performing a policy decision based on first information received from a second network element, and the first information comprises a QoS requirement of a multiplexed service data flow.

53. The method according to claim 52, wherein receiving the fifth information from the fourth network element comprises:
receiving the fifth information from the fourth network element via an N4 session.

54. The method according to claim 52 or 53, wherein the fifth information indicates at least one of:
a first indication indicating support for a traffic detection enhancement;
first description information comprising information related to the traffic detection enhancement;
a second indication indicating support for a QoS flow mapping enhancement; or
second description information comprising information related to the QoS flow mapping enhancement.

55. The method according to any one of claims 52 to 54, further comprising:
performing a traffic detection based on the fifth information.

56. The method according to claim 55, further comprising:
mapping, based on the fifth information and a traffic detection result, one or more multiplexed data flows of different media types within a single end-to-end transmission connection to one or more QoS flows.

57. An apparatus for processing a service data flow, comprising:
a transceiving module configured to receive first information sent by a second network element, wherein the first information comprises a quality of service (QoS) requirement of a multiplexed service data flow; and
a processing module configured to perform a policy decision based on the first information.

58. An apparatus for processing a service data flow, comprising:
a processing module configured to determine first information, wherein the first information comprises a quality of service (QoS) requirement of a multiplexed service data flow; and
a transceiving module configured to send the first information to a first network element to enable the first network element to perform a policy decision based on the first information.

59. An apparatus for processing a service data flow, comprising:
a transceiving module configured to receive a first message from a second network element, wherein the first message is configured to instruct the second network element to forward first information to a first network element, and the first information comprises a quality of service (QoS) requirement of a multiplexed service data flow.

60. An apparatus for processing a service data flow, comprising:
a transceiving module configured to receive third information from a first network element, wherein the third information is configured to trigger a session management (SM) policy association modification request operation, the third information is determined by the first network element after performing a policy decision based on first information received from a second network element, and the first information comprises a quality of service (QoS) requirement of a multiplexed service data flow; and
a processing module configured to determine at least one of a QoS rule or a QoS group parameter based on the third information.

61. An apparatus for processing a service data flow, comprising:
a transceiving module configured to receive fifth information from a fourth network element, wherein the fifth information indicates at least one of a quality of service (QoS) rule or a QoS group parameter, the fifth information is determined by the fourth network element based on third information received from a first network element, the third information is configured to trigger a session management (SM) policy association modification request operation, the third information is determined by the first network element after performing a policy decision based on first information received from a second network element, and the first information comprises a QoS requirement of a multiplexed service data flow.

62. A network device, comprising:
one or more processors;
a memory coupled to the one or more processors, wherein executable instructions are stored on the memory, and when the executable instructions are executed by the one or more processors, the network device is caused to perform the method for processing a service data flow according to any one of claims 1 to 56.

63. A communication device, comprising:
one or more processors;
a memory coupled to the one or more processors, wherein executable instructions are stored on the memory, and when the executable instructions are executed by the one or more processors, the one or more processors are caused to invoke instructions to enable the communication device to perform the method for processing a service data flow according to any one of claims 1 to 56.

64. A communication system, comprising a first network element, a second network element, a third network element, a fourth network element and a fifth network element, wherein the first network element is configured to implement the method for processing a service data flow according to any one of claims 1 to 22, the second network element is configured to implement the method for processing a service data flow according to any one of claims 23 to 31, the third network element is configured to implement the method for processing a service data flow according to any one of claims 32 to 39, the fourth network element is configured to implement the method for processing a service data flow according to any one of claims 40 to 51, and the fifth network element is configured to implement the method for processing a service data flow according to any one of claims 52 to 56.

65. A storage medium storing instructions, wherein when the instructions are run on a communication device, the communication device is caused to perform the method for processing a service data flow according to any one of claims 1 to 56.
